# EUROPÄISCHE PATENTANMELDUNG

(11) **EP 4 151 395 A1**
(43) Veröffentlichungstag der Anmeldung: **22.03.2023**
(21) Anmeldenummer: 21197425.8
(22) Anmeldetag: 17.09.2021
(51) Int. Cl.: B29C 70/52, B29B 15/12

(54) **VORRICHTUNG ZUR HERSTELLUNG VON MIT MATRIXMATERIAL IMPRÄGNIERTEN FASERROVINGEN**

(71) Anmelder: Celico GmbH, 08064 Zwickau (DE)
(72) Erfinder: Hennecke, Uwe, 08115 Lichtentanne (DE); Kranz, Matthias, 08058 Zwickau (DE)
(74) Vertreter: Steiniger, Carmen

(57) **Zusammenfassung**

Die vorliegende Erfindung betrifft eine Vorrichtung (1) zur Herstellung wenigstens eines mit einem Matrixmaterial (2) imprägnierten Faserrovings (3), wobei die Vorrichtung (1) eine Faserrovingbereitstellungseinheit (4), eine Matrixmaterialbereitstellungseinheit (20) zum Bereitstellen des Matrixmaterials (2) in Form eines Fluids, ein Imprägnierwerkzeug (5), eine Faserrovingabzugseinrichtung (6) zum Ziehen des wenigstens einen Faserrovings (3) durch das Imprägnierwerkzeug (5) und wenigstens eine in dem Imprägnierwerkzeug (5) ausgebildete Fluidzuführung (51, 52) aufweist, an deren Ende jeweils eine Austrittsdüse (517, 527) ausgebildet ist, die quer zur Faserrovinglängsrichtung (L) angeordnet ist wobei die wenigstens eine Fluidzuführung (51, 52) in Fluidfließrichtung (A_{1,} A₂ ) nacheinander ein mit einem Fluidzulauf (511, 521) verbundenes erstes Staubecken (512, 522, 522') mit einem ersten Überlauf (513, 523) und ein über den ersten Überlauf (513, 523) befüllbares zweites Staubecken (515, 525, 525') mit einem zweiten Überlauf (516, 526) aufweist, wobei der zweite Überlauf (516, 526) mit der jeweiligen Austrittsdüse (517, 527) verbunden ist.

## Beschreibung

Die vorliegende Erfindung betrifft eine Vorrichtung zur Herstellung wenigstens eines mit einem Matrixmaterial imprägnierten Faserrovings, wobei die Vorrichtung eine Faserrovingbereitstellungseinheit, eine Matrixmaterialbereitstellungseinheit zum Bereitstellen des Matrixmaterials in Form eines Fluids, ein Imprägnierwerkzeug, eine Faserrovingabzugseinrichtung zum Ziehen des wenigstens einen Faserrovings durch das Imprägnierwerkzeug und wenigstens eine in dem Imprägnierwerkzeug ausgebildete Fluidzuführung aufweist, an deren Ende jeweils eine Austrittsdüse ausgebildet ist, die quer zur Faserrovinglängsrichtung angeordnet ist.

Imprägnierte Faserrovinge, wie z. B. mit Polymermaterial beschichtete Glasfaser- oder Carbonfaserrovinge, können in verschiedenen Bereichen der Technik zum Einsatz kommen. Sie eignen sich insbesondere als leichtgewichtige Verstärkungsstrukturen. Aus imprägnierten Faserrovingen lassen sich auch Platten herstellen, die nachfolgend, auch zusammen mit weiteren Materiallagen, zu unterschiedlichsten Profilteilen, von Ablagen oder Himmeln in Fahrzeugen bis hin zu Schuhsohlen, umgeformt werden können. Je nach Materialstärke weisen solche Profilteile trotz sehr hoher mechanischer Stabilität eine gewisse Flexibilität auf und sind vor allem sehr leicht.

Eine Vorrichtung zur kontinuierlichen Herstellung von faserverstärkten Kunststoffen ist in der Druckschrift DE 35 21 228 A1 beschrieben. Das Fasermaterial wird dort unter Druck mit flüssigem Kunststoff getränkt, wobei die Strahlen des in die Tränkkammer eintretenden Kunststoffs im Wesentlichen senkrecht auf das Fasermaterial auftreffen. Die Faserstränge werden dadurch aufgefächert, sodass sie rasch durchtränkt werden.

In der Druckschrift US 5 863 332 A wird eine Vorrichtung zum Lösungs- oder Schmelzbeschichten oder zum Imprägnieren eines Substrates mit Harz oder mit Polymeren vorgeschlagen, mit der sich die Dicke des auf das Substrat aufgebrachten Fluids kontrollieren lässt.

Die Druckschrift US 2019/0 184 606 A1 offenbart eine Vorrichtung zum Schmelzimprägnieren eines Endlosfaserbandes, die einen gewellten Imprägnierungskanal aufweist, der zwischen einem oberen Halbteil mit einer gewellten Unterseite und einem unteren Halbteil mit einer gewellten Oberseite ausgebildet ist. Beim Durchgang durch den gewellten Imprägnierungskanals erfährt das Faserband beim Imprägnieren wechselnde Drücke und Fließgeschwindigkeiten.

Ein Verfahren und eine Vorrichtung zum Benetzen von linienförmigen Faserbündeln mit Kunststoff oder Harz wird in der Druckschrift US 5 073 413 A beschrieben. Die Fasern werden dabei mit Matrixmaterial imprägniert, zu einem Kabel verbunden, durch eine Pultrusionsdüse geführt und durch Anlegen eines Unterdrucks entgast.

Die Druckschrift US 6 387 179 B1 enthält eine Vorrichtung zur Harzimprägnierung von Faserbündeln, bei der das Harz entgegengesetzt der Abzugsrichtung des Faserbündels eingespritzt wird. Auf diese Art soll vermieden werden, dass es zu Lufteinschlüssen bei der Imprägnierung kommt.

Bei bisherigen Vorrichtungen zum Imprägnieren von Faserrovingen bestand das Problem, dass der Polymermaterialaustritt aus einer quer zur Längssrichtung der Faserrovinge verlaufenden Austrittsdüse eines Imprägnierwerkzeuges der jeweiligen Vorrichtung auf die Faserrovinge über die Breite des Imprägnierwerkzeuges hinweg stark inhomogen ist. So ist die Polymerschichtdicke in Bahnmitte deutlich höher als am Bahnrand. Dies führt in aus den imprägnierten Faserrovingen ausgebildeten Formteilen zu häufig nicht akzeptablen, inhomogenen Formteileigenschaften.

Einen Vorschlag zur Verringerung dieses Effektes enthält die Druckschrift EP 2 517 853 A1, aus der eine Vorrichtung der eingangs angegebenen Gattung zur Herstellung imprägnierter Faserrovinge bekannt ist. In dieser Vorrichtung wird eine Schar von Endlosfaserrovingen mit einem Polymermaterial imprägniert. Hierfür durchlaufen diese Faserrovinge auf einer wellenförmigen Bahn ein beheiztes Imprägnierwerkzeug. Dem Formwerkzeug wird das Polymermaterial in fluider Form durch einen Extruder geliefert, der mit einer in dem Imprägnierwerkzeug ausgebildeten Mehrfachverteileranordnung verbunden ist, an deren Ende eine sich über die Bahnbreite erstreckende Austrittsdüse vorgesehen ist. Die Mehrfachverteileranordnung verteilt das fluide Polymermaterial über in einer Baumstruktur über die Breite des Imprägnierwerkzeuges angeordnete, horizontale Kanäle und weist an ihrem Ende beispielsweise acht sich in Fließrichtung des Polymermaterials aufweitende Austrittsöffnungen auf, die in die vertikal ausgerichtete Austrittsdüse münden.

Trotz der relativ aufwändigen, in der Vorrichtung der Druckschrift EP 2 517 853 A1 verwendeten Polymermaterialzuführung zu den zu imprägnierenden Faserrovingen mittels der Mehrfachverteileranordnung ist das Ergebnis nicht zufriedenstellend. So bilden sich die Austrittsöffnungen in Form von Streifen auf den imprägnierten Faserrovingen ab.

Dies versucht man im Stand der Technik dadurch auszugleichen, dass besonders viel Polymermaterial auf die Faserrovinge aufgebracht wird, wobei beim Austritt der beschichteten Faserrovinge aus dem Imprägnierwerkzeug überschüssiges Polymermaterial von der Oberfläche der beschichteten Faserrovinge abgestriffen wird und/oder die imprägnierten Faserrovinge durch ein Walzenpaar geführt werden, an dem überschüssiges Polymermaterial von den beschichteten Faserrovingen abgequetscht wird. Diese Vorgehensweise führt jedoch zu einem hohen Materialverbrauch.

Es ist daher die Aufgabe der vorliegenden Erfindung, eine Vorrichtung der eingangs genannten Gattung so weiterzubilden, dass damit trotz geringem Materialverbrauch eine homogene Faserrovingimprägnierung erfolgt.

Die Aufgabe wird erfindungsgemäß durch eine Vorrichtung zur Herstellung wenigstens eines mit einem Matrixmaterial imprägnierten Faserrovings gelöst, wobei die Vorrichtung eine Faserrovingbereitstellungseinheit, eine Matrixmaterialbereitstellungseinheit zum Bereitstellen des Matrixmaterials in Form eines Fluids, ein Imprägnierwerkzeug, eine Faserrovingabzugseinrichtung zum Ziehen des wenigstens einen Faserrovings durch das Imprägnierwerkzeug und wenigstens eine in dem Imprägnierwerkzeug ausgebildete Fluidzuführung aufweist, an deren Ende jeweils eine Austrittsdüse ausgebildet ist, die quer zur Faserrovinglängsrichtung angeordnet ist, wobei die wenigstens eine Fluidzuführung in Fluidfließrichtung nacheinander ein mit einem Fluidzulauf verbundenes erstes Staubecken mit einem ersten Überlauf und ein über den ersten Überlauf befüllbares zweites Staubecken mit einem zweiten Überlauf aufweist, wobei der zweite Überlauf mit der jeweiligen Austrittsdüse verbunden ist.

Unter einem Faserroving wird allgemein als auch in der vorliegenden Erfindung ein Faserbündel aus Einzelfasern verstanden. Innerhalb des Faserbündels können die Einzelfasern gerade oder gedreht ausgerichtet sein. Ein Faserroving kann aus Einzelfasern gleichen oder unterschiedlichen Typs ausgebildet sein.

Kommen bei der vorliegenden Erfindung bei einem an der Vorrichtung ausgeführten Prozess mehrere Faserrovinge bzw. eine Schar von Faserrovingen zum Einsatz, können diese Faserrovinge gleichen oder unterschiedlichen Typs sein, insbesondere aus gleichen oder unterschiedlichen Materialien bestehen und/oder gleiche oder unterschiedliche Abmessungen und/oder Dichte und/oder Zugfestigkeit aufweisen.

In der erfindungsgemäßen Vorrichtung wird der wenigstens eine zu imprägnierende Faserroving, vorzugsweise eine Schar nebeneinander verlaufender Faserrovinge, von der Faserrovingbereitstellungseinheit bereitgestellt. Die Faserrovinge sind vorzugsweise Endlosfaserrovinge.

Die Faserrovinge können aus Glasfasern und/oder Kohlefasern und/oder Aramidfasern und/oder Basaltfasern und/oder Textilfasern und/oder anderen Fasern ausgebildet sein.

Die Faserrovingbereitstellungseinheit weist hierfür beispielsweise mindestens eine Spule auf, von der der jeweilige Faserroving abgespult wird, bzw. ein Spulengatter mit mehreren Spulen auf, von welchen die jeweiligen Faserroving abgespult werden.

In Bearbeitungsrichtung der Vorrichtung nach der Faserrovingsbereitstellungeinheit kann eine Spreizeinrichtung zum Spreizen des wenigstens einen Faserrovings vorgesehen sein. In einfachen Ausgestaltungen der Erfindung bzw. bei Verwendung bereits vorgespreizter Faserrovinge kann die Spreizeinrichtung auch weggelassen werden. In der Spreizeinrichtung erfolgt ein Spreizen des wenigstens einen Faserrovings, wobei ein beispielsweise ursprünglich runder oder ovaler Querschnitt des wenigstens einen Faserrovings abgeflacht wird. Der wenigstens eine Faserroving weist nach dem Spreizen eine größere Breite und eine geringere Höhe als vor dem Spreizen auf. Die Fasern, aus welchen der Faserroving zusammengesetzt ist, liegen nach dem Spreizen im Wesentlichen flächig nebeneinander. Dadurch sind im nachfolgenden Imprägnierwerkzeug auch die ursprünglich im Inneren des wenigstens einen Faserrovings liegenden Fasern gut imprägnierbar. Ferner bilden die nebeneinander liegenden Fasern eine gut beschichtbare Faserrovingoberfläche aus.

Die Spreizeinrichtung kann eine Mehrzahl von Spreizstäben aufweisen, über die der wenigstens eine Faserroving geführt wird. Die Spreizstäbe können in wenigstens zwei Ebenen angeordnet und/oder zueinander versetzt angeordnet sein. Eine vorteilhafte Spreizung ergibt sich, wenn die Spreizstäbe beheizt sind, was jedoch nicht unbedingt erforderlich ist.

Kommen bei der vorliegenden Erfindung mehrere Faserrovinge und eine Spreizeinrichtung zum Einsatz, liegen die gespreizten Faserrovinge nach ihrem Austritt aus der Spreizeinrichtung vorzugsweise derart eng nebeneinander, dass ihre Oberflächen zusammen eine durchgängige beschichtbare Fläche ausbilden. Dies ist jedoch kein Muss.

In der Bearbeitungsrichtung nach der Spreizeinrichtung oder direkt nach der Faserrovingbereitstellungseinheit ist das Imprägnierwerkzeug angeordnet. In dem Imprägnierwerkzeug wird der wenigstens eine Faserroving mit dem Matrixmaterial imprägniert. Hierfür ist das Imprägnierwerkzeug mit der Matrixmaterialbereitstellungeinheit über wenigstens ein Verbindungsmittel, wie einem Verbindungsrohr oder einem Verbindungsschlauch, verbunden.

In der Matrixmaterialbereitstellungseinheit wird das jeweilige Matrixmaterial in fluider, d. h. fließfähiger, Form bereitgestellt, welches dann über das wenigstens eine Verbindungsmittel dem Imprägnierwerkzeug zugeführt wird.

Die Matrixmaterialbereitstellungseinheit ist vorzugsweise ein Extruder, kann jedoch auch in einfachen Ausgestaltungen der Erfindung nur einen oder mehrere, das Matrixmaterial oder Komponenten des Matrixmaterials enthaltende(n) Behälter und eine Heizvorrichtung aufweisen.

Das Matrixmaterial ist vorzugsweise ein thermoplastischer Kunststoff, wie beispielsweise Polyethylen, Polypropylen, Polyetheretherkaton.

Die in dem Imprägnierwerkzeug ausgebildete Fluidzuführung ist mit dem wenigstens einen Verbindungsmittel verbunden. Über die Fluidzuführung gelangt das fluide Matrixmaterial mittels der am Ende der Fluidzuführung ausgebildeten wenigstens einen Austrittsdüse auf den wenigstens einen Faserroving, der durch das Imprägnierwerkzeug geführt wird.

Die Austrittsdüse ist hierbei quer zu der Faserrovinglängsrichtung des Faserrovings ausgerichtet, sodass der wenigstens eine Faserroving über seine Breite hinweg mit dem Matrixmaterial beschichtet wird bzw. eine Schar mehrerer parallel durch das Imprägnierwerkzeug geführter Faserrovings in ihrer gesamten Scharbreite mit dem Matrixmaterial beschichtet wird.

Dabei kann die Imprägnierung des wenigstens einen Faserrovings nur von einer Seite, wie beispielsweise nur von oben oder nur von unten, oder von beiden Seiten, wie beispielsweise von oben und von unten, erfolgen.

Erfindungsgemäß weist die Fluidzuführung wenigstens zwei Staubecken auf, die miteinander in fluider Verbindung stehen. Dabei fließt das Matrixmaterial zunächst in das erste Staubecken. Das erste Staubecken hat eine erste Beckenbreite, die sich parallel zu der Düsenbreite der Austrittsdüse, vorzugsweise über die gesamte Werkzeugbreite des Imprägnierwerkzeuges, erstreckt. Das erste Staubecken wird zunächst durch das Matrixmaterial befüllt. Dabei erfolgt bereits eine erste Homogenisierung des das Matrixmaterial enthaltenden Fluidstromes über die Beckenbreite des ersten Staubeckens hinweg. Dann füllt sich das zweite Staubecken, wodurch sich der Fluidstrom nochmals homogenisiert. Wenn das erste Staubecken eine die Höhe des ersten Überlaufes überschreitende Befüllung aufweist, fließt das Matrixmaterial über den ersten Überlauf in das zweite Staubecken. Das zweite Staubecken hat eine zweite Beckenbreite, die sich auch parallel zu der Düsenbreite der Austrittsdüse, vorzugsweise über die gesamte Werkzeugbreite des Imprägnierwerkzeuges, erstreckt. Erst wenn das zweite Staubecken eine die Höhe des zweiten Überlaufes überschreitende Befüllung aufweist, fließt das Matrixmaterial über den zweiten Überlauf zu der Austrittsdüse.

Durch die vorliegende Erfindung kann vor der Austrittsdüse unabhängig von der Werkzeugbreite auf sehr geringem Bauraum eine gleichmäßige Fluidverteilung in der Fluidzuführung gewährleistet werden. Dadurch ergibt sich trotz geringem Materialeinsatz ein gleichmäßiger Auftrag von Matrixmaterial auf dem wenigstens einen Faserroving. Die erfindungsgemäße Ausgestaltung der Fluidzuführung homogenisiert den Fluidstrom durch die mittels der Staubecken und Überläufe ausgebildeten Stau-, Brems- und/oder Barrierestufen, durch welche ein Anstromfluss beruhigt und gleichzeitig bei Bedarf der Gravitation entgegen gewirkt wird.

Durch die vorliegende Erfindung ist zudem je nach Werkzeugbreite des Imprägnierwerkzeuges nur noch eine grobe Vorverteilung des fluiden Matrixmaterials im Vorfeld, also in der Fluidfließrichtung vor den Staubecken, nötig, was in der Gesamtheit zu einem geringeren Platzbedarf der erfindungsgemäßen Vorrichtung im Vergleich zu aus dem Stand der Technik bekannten Vorrichtungen führt.

In einer vorteilhaften Ausführungsform der erfindungsgemäßen Vorrichtung weist das Imprägnierwerkzeug wenigstens einen Block aufweist, in dem das erste Staubecken, das zweite Staubecken und die Austrittsdüse angeordnet sind, wobei der Block eine Faserführungsfläche mit einer durch eine Auskragung ausgebildeten Faserumlenkung aufweist und wobei eine Austrittsöffnung der Austrittsdüse in der Faserführungsfläche in Fasertransportrichtung bis zu 2 cm vor, auf oder bis zu 2 cm nach der durch die Auskragung ausgebildeten Faserumlenkung ausgebildet ist.

Durch die wenigstens eine Faserumlenkung wird das Matrixmaterial gut in das Material des wenigstens einen Faserrovings eingearbeitet. Dadurch, dass sich bei dieser Ausführungsform die Austrittsöffnung der Austrittsdüse in unmittelbarer Nähe der Faserumlenkung befindet, kann das Matrixmaterial besonders effektiv in das Material des wenigstens einen Faserrovings eindringen und diesen entsprechend gut imprägnieren.

In einer bevorzugten Ausführungsform der Erfindung ist zu beiden Seiten des wenigstens einen Faserrovings wenigstens ein solcher Block mit entsprechend angeordneten Austrittsöffnungen der Austrittsdüsen angeordnet, wobei jeweils eine Auskragung eines Blocks auf einer ersten Seite des wenigstens einen Faserrovings in eine Senke eines Blocks auf einer zweiten Seite des wenigstens einen Faserrovings eingreift und umgekehrt. Dadurch wird der wenigstens eine Faserroving innerhalb des Imprägnierwerkzeuges entlang einer wellenförmigen Imprägnierspur gezogen, entlang welcher sich das von beiden Seiten kommende Matrixmaterial gut in dem wenigstens einen Faserroving verteilt.

Das Imprägnierwerkzeug kann vorteilhaft an unterschiedliche Imprägnieraufgaben angepasst und leicht gewartet werden, wenn in einer Ausführungsform der vorliegenden Erfindung das erste Staubecken, das zweite Staubecken und die Austrittsdüse jeweils in einem das Imprägnierwerkzeug montierten, austauschbaren Einsatz ausgebildet sind.

Vorzugsweise ist der Einsatz jeweils in einem Block eingebaut.

Grundsätzlich ist bei der vorliegenden Erfindung die Größe der Düsenweite variabel. Besonders wenig Matrixmaterial wird durch die Vorrichtung verbraucht, wenn in einer Ausführungsform der Vorrichtung die Austrittsdüse eine Düsenweite von maximal 2 mm, besonders bevorzugt von maximal 0,8 mm aufweist.

Bevorzugte Ausführungsformen der vorliegenden Erfindung, deren Aufbau, Funktion und Vorteile werden im Folgenden anhand von Figuren näher erläutert, wobei
- Figur 1: schematisch eine mögliche Ausführungsform der erfindungsgemäßen Vorrichtung zeigt;
- Figur 2: schematisch zwei einander gegenüber angeordnete Blocks eines Imprägnierwerkzeuges mit einem austauschbaren Einsatz gemäß einer Ausführungsform der erfindungsgemäßen Vorrichtung in einer perspektivischen Ansicht zeigt;
- Figur 3: schematisch zwei einander gegenüber angeordnete, fest verbaute Blöcke eines Imprägnierwerkzeuges einer anderen Ausführungsform der erfindungsgemäßen Vorrichtung in einer perspektivischen Ansicht zeigt;
- Figur 4: schematisch einen Block eines Imprägnierwerkzeuges einer Ausführungsform der erfindungsgemäßen Vorrichtung mit einer in Fasertransportrichtung vor einer Faserumlenkung angeordneten Austrittsdüse in einer geschnittenen Seitenansicht zeigt;
- Figur 5: schematisch einen Block eines Imprägnierwerkzeuges einer Ausführungsform der erfindungsgemäßen Vorrichtung mit einer in Fasertransportrichtung auf einer Faserumlenkung angeordneten Austrittsdüse in einer geschnittenen Seitenansicht zeigt;
- Figur 6: schematisch einen Block eines Imprägnierwerkzeuges einer Ausführungsform der erfindungsgemäßen Vorrichtung mit einer in Fasertransportrichtung nach einer Faserumlenkung angeordneten Austrittsdüse in einer geschnittenen Seitenansicht zeigt;
- Figur 7: schematisch einen Block eines Imprägnierwerkzeuges einer Ausführungsform der erfindungsgemäßen Vorrichtung mit einem senkrechten Verlauf einer Austrittsdüse in einer geschnittenen Seitenansicht zeigt;
- Figur 8: schematisch einen Block eines Imprägnierwerkzeuges einer Ausführungsform der erfindungsgemäßen Vorrichtung mit einem schrägen Verlauf einer Austrittsdüse in einer geschnittenen Seitenansicht zeigt, deren Austrittsöffnung in Fasertransportrichtung vor einer Faserumlenkung angeordnet ist;
- Figur 9: schematisch einen Block eines Imprägnierwerkzeuges einer Ausführungsform der erfindungsgemäßen Vorrichtung mit einem schrägen Verlauf einer Austrittsdüse in einer geschnittenen Seitenansicht zeigt, deren Austrittsöffnung in Fasertransportrichtung direkt an einer Faserumlenkung angeordnet ist;
- Figur 10: schematisch einen Block eines Imprägnierwerkzeuges einer Ausführungsform der erfindungsgemäßen Vorrichtung mit im Querschnitt quaderförmigen Staubecken in einer geschnittenen Seitenansicht zeigt;
- Figur 11: schematisch einen Block eines Imprägnierwerkzeuges einer Ausführungsform der erfindungsgemäßen Vorrichtung mit im Querschnitt runden Staubecken in einer geschnittenen Seitenansicht zeigt;
- Figur 12: schematisch eine weitere mögliche Variante eines Bereiches einer Fluidzuführung von oben innerhalb eines Imprägnierwerkzeuges einer Ausführungsform der erfindungsgemäßen Vorrichtung in einer geschnittenen Seitenansicht zeigt;
- Figur 13: bis Figur 16 schematisch weitere mögliche Varianten eines Bereiches einer Fluidzuführung von unten innerhalb eines Imprägnierwerkzeuges von Ausführungsformen der erfindungsgemäßen Vorrichtung jeweils in geschnittenen Seitenansichten zeigen;
- Figur 17: schematisch oberhalb und unterhalb wenigstens eines Faserrovings angeordnete Blocks eines Imprägnierwerkzeuges einer Ausführungsform der erfindungsgemäßen Vorrichtung zeigt;
- Figur 18: schematisch jeweils seitlich wenigstens eines Faserrovings angeordnete Blocks eines Imprägnierwerkzeuges einer Ausführungsform der erfindungsgemäßen Vorrichtung zeigt;
- Figur 19: schematisch durch einen Pfeil eine Stelle in einem Imprägnierwerkzeug einer Ausführungsform der vorliegenden Vorrichtung andeutet, wo sich eine Fluidvorverteilung des Matrixmaterials befindet;
- Figur 20: schematisch einen Teilbereich einer Fluidzuführung in einem Imprägnierwerkzeug einer Ausführungsform der vorliegenden Vorrichtung ohne Fluidvorverteilung zeigt;
- Figur 21: schematisch einen Teilbereich einer Fluidzuführung in einem Imprägnierwerkzeug einer Ausführungsform der vorliegenden Vorrichtung mit einer zwei Kanäle aufweisenden Fluidvorverteilung zeigt;
- Figur 22: schematisch einen Teilbereich einer Fluidzuführung in einem Imprägnierwerkzeug einer Ausführungsform der vorliegenden Vorrichtung mit einer vier Kanäle aufweisenden Fluidvorverteilung zeigt; und
- Figur 23: schematisch einen Teilbereich einer Fluidzuführung in einem Imprägnierwerkzeug einer Ausführungsform der vorliegenden Vorrichtung mit einer acht Kanäle aufweisenden Fluidvorverteilung zeigt.

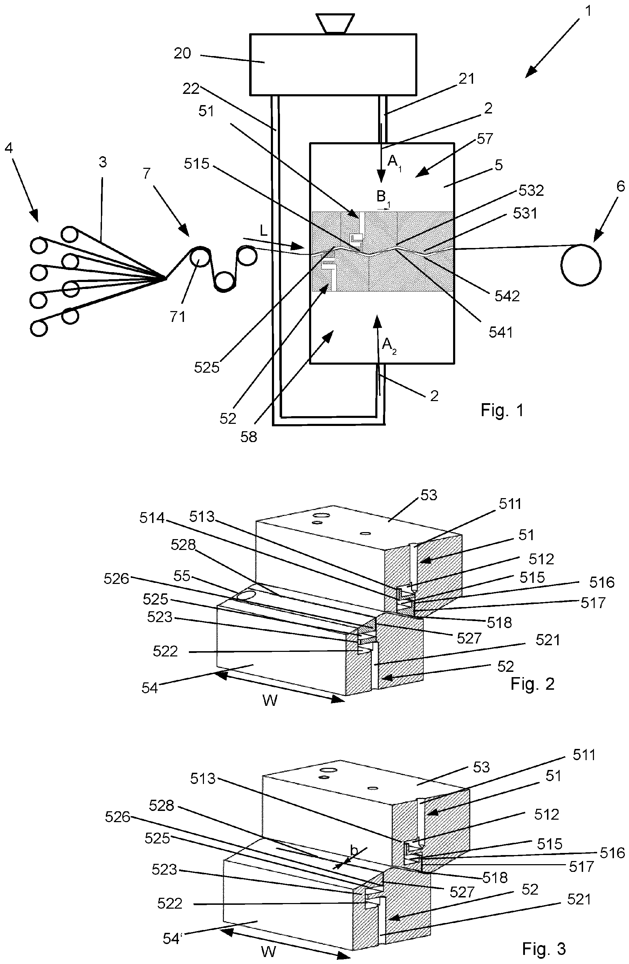

Figur 1 zeigt schematisch eine mögliche Ausführungsform der erfindungsgemäßen Vorrichtung 1. Die Vorrichtung 1 dient der Herstellung wenigstens eines mit einem Matrixmaterial 2 imprägnierten Faserrovings 3.

Die Vorrichtung 1 weist eine Faserrovingbereitstellungseinheit 4 auf, die in dem gezeigten Ausführungsbeispiel als Spulengatter ausgebildet ist.

Von der Faserrovingbereitstellungseinheit 4 werden in dem gezeigten Ausführungsbeispiel mehrere Faserrovinge 3 abgespult.

Die Vorrichtung 1 weist ferner eine der Faserrovingbereitstellungseinheit 4 in Fasertransportrichtung B₁ nachgeordnete Spreizeinrichtung 7 zum Spreizen der Faserrovinge 3 auf. Die Spreizeinrichtung 7 weist in dem gezeigten Ausführungsbeispiel eine Mehrzahl versetzt zueinander angeordnete, beheizbare Spreizstäbe 71 auf.

Der Spreizeinrichtung 7 ist in der Fasertransportrichtung B₁ ein Imprägnierwerkzeug 5 nachgeordnet.

An das Imprägnierwerkzeug 5 ist eine Matrixmaterialbereitstellungseinheit 20 zum Bereitstellen des Matrixmaterials 2 über Verbindungsmittel 21, 22 angekoppelt. In der gezeigten Ausführungsform ist die Matrixmaterialbereitstellungseinheit 20 ein Extruder, die Verbindungsmittel 21, 22 sind Verbindungsschläuche.

Innerhalb des Imprägnierwerkzeuges 5 befinden sich Fluidzuführungen 51, 52, über die das in fluider Form in das Imprägnierwerkzeug 5 entsprechend der Pfeile A₁, A₂ eingebrachte Matrixmaterial 2 bis zu den Faserrovingen 3 geleitet wird. In dem gezeigten Ausführungsbeispiel kommt eine erste Fluidzuführung 51, die in dem Beispiel oberhalb der durch das Imprägnierwerkzeug 5 geführten Faserrovinge 5 angeordnet ist, und eine zweite Fluidzuführung 52 zum Einsatz, die in dem Beispiel unterhalb der durch das Imprägnierwerkzeug 5 geführten Faserrovinge 5 angeordnet ist.

Wie es detaillierter in den Figuren 2 und 3 dargestellt ist, weist die erste Fluidzuführung 51 einen Fluidzulauf 511 auf, der in ein erstes Staubecken 512 mündet. An einem dem Fluidzulauf 511 gegenüber befindlichen Ende des Staubeckens 512 ist dieses durch eine Wand begrenzt, die als Überlauf 513 dient. An diesen Überlauf 513 schließt sich ein Kanal 514 an, der in ein zweites Staubecken 515 mündet. Das zweite Staubecken 515 ist auf seiner dem Kanal 514 gegenüber liegenden Seite durch eine Wand begrenzt, die als zweiter Überlauf 516 dient. Über den zweiten Überlauf 516 fließt das Matrixmaterial 2 in eine Austrittsdüse 517.

Die zweite Fluidzuführung 52 weist einen Fluidzulauf 521 auf, der in ein erstes Staubecken 522 mündet. Das erste Staubecken 522 ist an einem Bereich seiner Oberseite durch eine Wand begrenzt. Ein weiterer Bereich der Oberseite des ersten Staubeckens 522 ist jedoch offen, wodurch sich ein erster Überlauf 523 ergibt. Über diesen ersten Überlauf 523 kann das fluide Matrixmaterial 2 nach oben in ein zweites Staubecken 525 fließen. Das zweite Staubecken 525 ist wiederum an einem Bereich seiner Oberseite durch eine Wand begrenzt. Die durch diese Wand begrenzte Öffnung des zweiten Staubeckens 525 bildet einen zweiten Überlauf 526, der in eine Austrittsdüse 527 übergeht.

In der in Figur 2 gezeigten Ausführungsform erstrecken sich die jeweiligen ersten und zweiten Staubecken 512, 522, 515, 525 als auch die Austrittsdüsen 517, 527 über die gesamte Werkzeugbreite W des Imprägnierwerkzeuges 5. In dem Ausführungsbeispiel von Figur 3 sind die ersten und zweiten Staubecken 512, 522, 515, 525 sowie die Austrittsdüsen 517, 527 kürzer.

Figur 2 zeigt schematisch zwei einander gegenüber angeordnete Blöcke 53, 54 eines Imprägnierwerkzeuges, wie des Imprägnierwerkzeuges 5 aus Figur 1. Der Block 54 weist in dem gezeigten Ausführungsbeispiel einen austauschbaren Einsatz 55 auf, in dem die oben beschriebenen ersten und zweiten Staubecken 522, 525 sowie die entsprechenden Überläufe 523, 526 vorgesehen sind.

In dem in Figur 3 dargestellten Ausführungsbeispiel sind die ersten und zweiten Staubecken 512, 522, 515, 525 sowie die Austrittsdüsen 517, 527 in den Blöcken 53, 54' jeweils fest verbaut.

In den gezeigten Ausführungsbeispielen weisen die verwendeten Austrittsdüsen 517, 527 eine Düsenweite b von maximal 0,8 mm auf.

Die Blöcke 53, 54 sind in den Ausführungsbeispielen, die in den Figuren 1 bis 3 gezeigt sind, im Querschnitt fünfeckig ausgebildet. Sie weisen jeweils eine Auskragung 531, 541 auf, die jeweils in eine zwischen zwei Blöcken 53, 53 bzw. 54, 54 ausgebildete Senke 532, 542 ragt. Dadurch ergibt sich zwischen den sich gegenüber befindlichen Blöcken 53, 54 in dem Imprägnierwerkzeug 5 eine wellen- oder zickzackförmige Imprägnierspur, entlang der die Faserrovinge 3 zum Imprägnieren geführt werden. Die Auskragungen 531, 541 bilden jeweils Faserumlenkungen für die Faserrovinge 3.

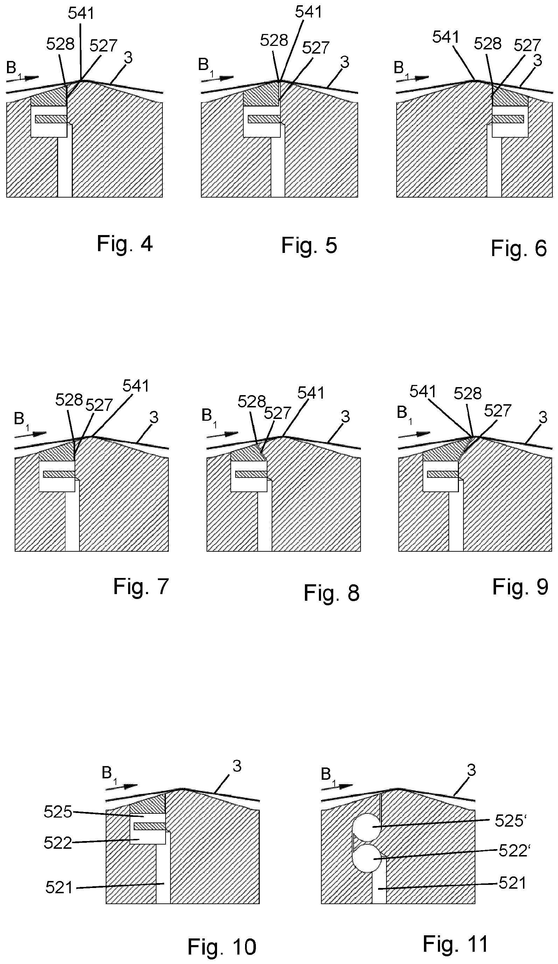

Wie es anhand der Figuren 4 bis 6 in Zusammenhang mit den Figuren 2 und 3 zu sehen ist, kann eine Austrittsöffnung 518, 528 der jeweils verwendeten Austrittsdüsen 517, 527 an unterschiedlichen Stellen vorgesehen sein. In der Ausführungsform von Figur 4 befindet sich die Austrittsöffnung 528 in der Fasertransportrichtung B₁ vor der Auskragung 541 und damit vor der Faserumlenkung, in Figur 5 direkt an der Auskragung 541 und in Figur 6 528 in der Fasertransportrichtung B₁ nach der Auskragung 541. Vorzugsweise beträgt in den Figuren 4 und 6 der jeweilige Abstand der Austrittsöffnung 528 von der Auskragung 541 maximal 2 cm.

Wie es in den Figuren 7 bis 9 zu sehen ist, kann die Austrittsdüse 517, 527 unterschiedlich ausgerichtet sein. So ist beispielsweise in der Ausführungsform von Figur 7 die Austrittsdüse 527 senkrecht ausgerichtet, während die Austrittsdüse 527 in der Ausführungsform von Figur 8 eine von der Auskragung 541 weg gerichtete Schräge und in Figur 9 eine zu der Auskragung 541 hin geneigte Schräge aufweist. Mit anderen Worten kann der Winkel der Austrittsöffnung 518, 528 zu den Faserrovingen 3 größer, kleiner oder gleich 90 ° sein

Wie es ferner beispielhaft anhand der Figuren 10 und 11 erkennbar ist, können die ersten und zweiten Staubecken 512, 522, 522', 515, 525, 525' unterschiedliche Formen, wie beispielsweise quaderförmige oder im Querschnitt runde oder ovale Formen oder Kombinationen daraus aufweisen.

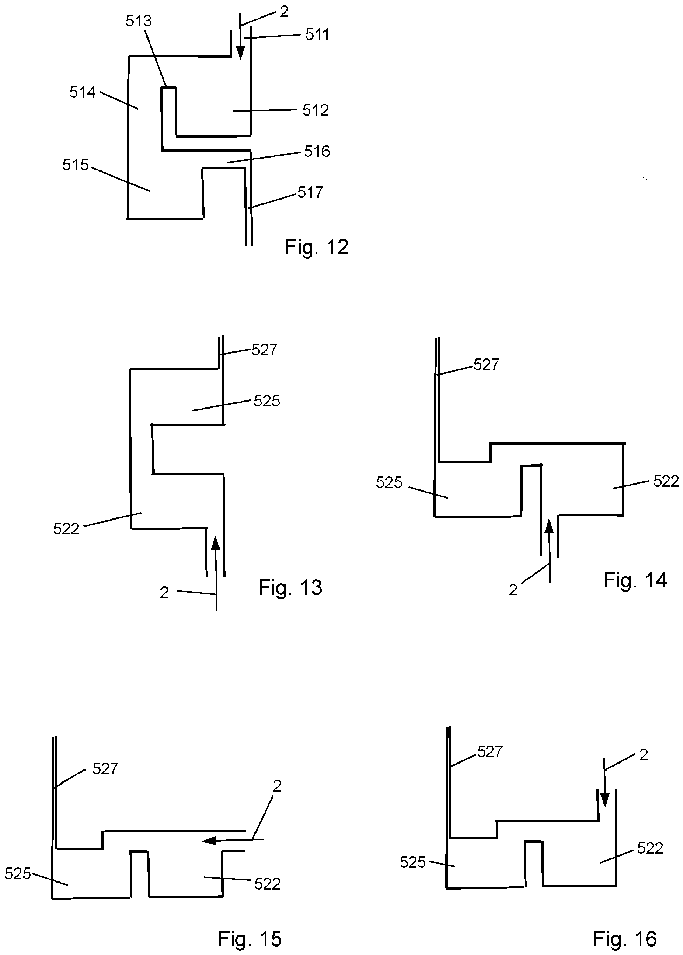

Auch hinsichtlich der Fluidzuläufe 511, 521 sowie der Überläufe 513, 523, 516, 526 sind unterschiedliche konstruktive Gestaltungsmöglichkeiten denkbar, wie es beispielhaft anhand der Figuren 12 bis 16 erkennbar ist. Wie es auch anhand der Figuren 13 bis 16 erkennbar ist, kann der Zulauf für das fluide Matrixmaterial 2 sowohl unten, oben als auch seitlich in Relation zu dem ersten Staubecken 512, 522 vorgesehen sein.

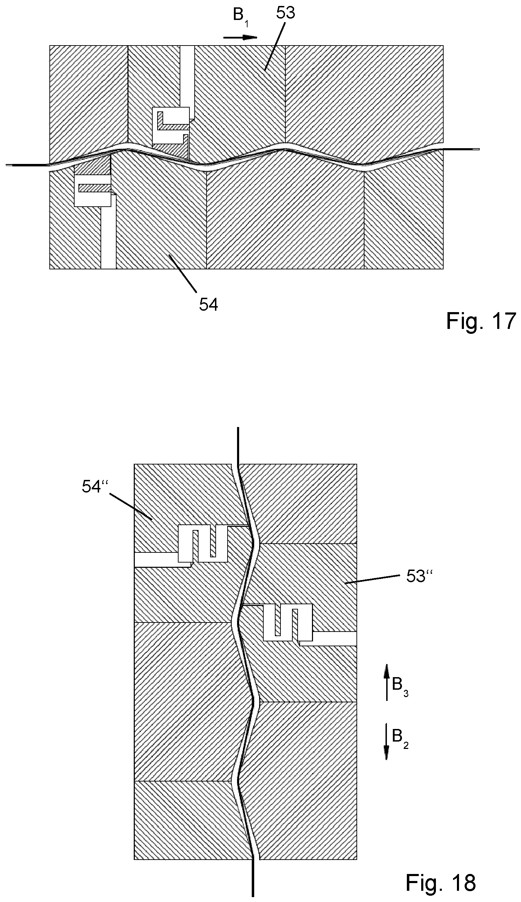

Aus Figur 17 ist ersichtlich, dass in der vorliegenden Erfindung die Blöcke 53, 54, wie in den obigen Ausführungsformen, übereinander angeordnet sein können, wobei die Details dieser Blöcke 53, 54 den oben beschriebenen Details entsprechen können. Darüber hinaus ist es möglich, dass entsprechende Blöcke 53", 54", die ebenfalls die gleichen Details wie oben beschrieben aufweisen können, auch nebeneiander angeordnet sein können. Während die Faserrovinge 3 das Imprägnierwerkzeug 5 in der Ausführungsform von Figur 17 horizontal durchlaufen, durchlaufen die Faserrovinge 3 das Imprägnierwerkzeug 5 in der Ausführungsform von Figur 18 vertikal entweder nach unten entsprechend der Fasertransportrichtung B₂ oder vertikal nach oben entsprechend der Fasertransportrichtung B₃. Ferner ist e möglich, dass die Faserrovinge das Imprägnierwerkzeug 5 in einem von 90 ° oder 180 ° abweichenden Winkel durchlaufen.

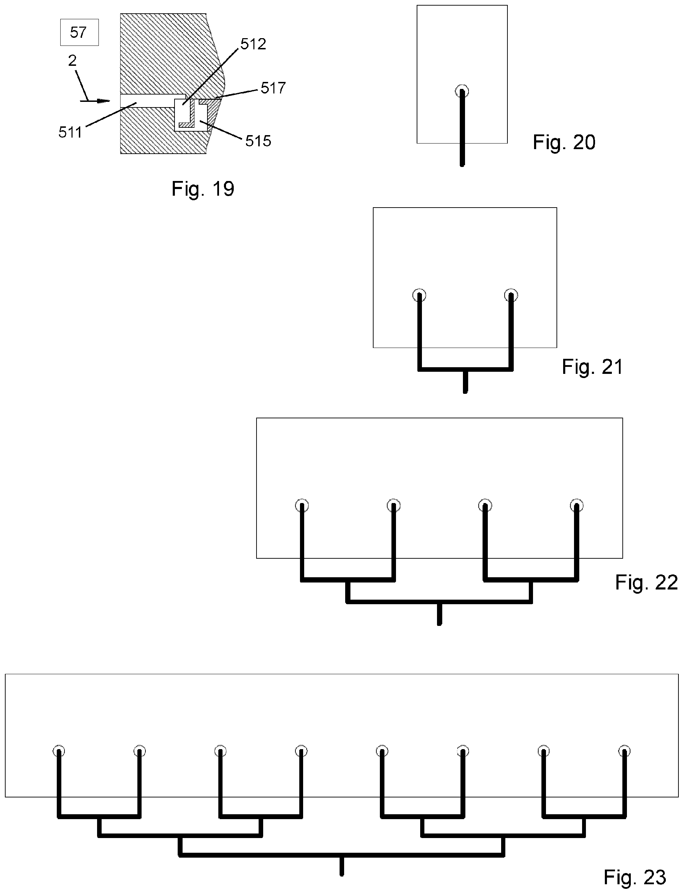

In den in Figur 1 in dem Imprägnierwerkzeug 5 schematisch durch die Pfeile 57, 58 gekennzeichneten Bereichen kann jeweils eine Fluidvorverteilung des Matrixmaterials 2 vorgesehen sein. Beispielsweise kann diese Fluidvorverteilung, wie in den Figuren 21 bis 23 zu sehen, zwei, vier oder acht Kanäle aufweisen. Es kann jedoch auch, wie in Figur 20 schematisch gezeigt, nur ein einziger Kanal zu dem jeweiligen Fluidzulauf 511, 521 vorgesehen sein. Diese sehr einfache Fluidvorverteilung ist möglich durch den speziellen erfindungsgemäßen, die Staubecken 512, 522, 515, 525 enthaltenden Fluidzuführungen 51, 52. Die in den Figuren 20 bis 23 nur schematisch gezeigten Fluidvorverteilungen können auf jede Werkzeuggröße beliebig erweitert werden.

## Patentansprüche

1. Vorrichtung (1) zur Herstellung wenigstens eines mit einem Matrixmaterial (2) imprägnierten Faserrovings (3), wobei die Vorrichtung (1) eine Faserrovingbereitstellungseinheit (4), eine Matrixmaterialbereitstellungseinheit (20) zum Bereitstellen des Matrixmaterials (2) in Form eines Fluids, ein Imprägnierwerkzeug (5), eine Faserrovingabzugseinrichtung (6) zum Ziehen des wenigstens einen Faserrovings (3) durch das Imprägnierwerkzeug (5) und wenigstens eine in dem Imprägnierwerkzeug (5) ausgebildete Fluidzuführung (51, 52) aufweist, an deren Ende jeweils eine Austrittsdüse (517, 527) ausgebildet ist, die quer zur Faserrovinglängsrichtung (L) angeordnet ist, **dadurch gekennzeichnet, dass** die wenigstens eine Fluidzuführung (51, 52) in Fluidfließrichtung (A_{1,} A₂) nacheinander ein mit einem Fluidzulauf (511, 521) verbundenes erstes Staubecken (512, 522, 522') mit einem ersten Überlauf (513, 523) und ein über den ersten Überlauf (513, 523) befüllbares zweites Staubecken (515, 525, 525') mit einem zweiten Überlauf (516, 526) aufweist, wobei der zweite Überlauf (516, 526) mit der jeweiligen Austrittsdüse (517, 527) verbunden ist.

2. Vorrichtung nach Anspruch 1, **dadurch gekennzeichnet, dass** das Imprägnierwerkzeug (5) wenigstens einen Block (53, 54, 54') aufweist, in dem das erste Staubecken (512, 522, 522'), das zweite Staubecken (515, 525, 525') und die Austrittsdüse (517, 527) angeordnet sind, wobei der Block (53, 54, 54') eine Faserführungsfläche mit einer durch eine Auskragung (531, 541) ausgebildeten Faserumlenkung aufweist und wobei eine Austrittsöffnung der Austrittsdüse (517, 527) in der Faserführungsfläche in Fasertransportrichtung (B₁, B₂, B₃) bis zu 2 cm vor, auf oder bis zu 2 cm nach der durch die Auskragung (531, 541) ausgebildeten Faserumlenkung ausgebildet ist.

3. Vorrichtung nach Anspruch 2, **dadurch gekennzeichnet, dass** in dem Imprägnierwerkzeug (5) zu beiden Seiten des wenigstens einen Faserrovings (3) wenigstens ein solcher Block (53, 54, 54') mit entsprechend angeordneten Austrittsöffnungen (518; 528) der Austrittsdüsen (517, 527) angeordnet ist, wobei jeweils eine Auskragung (531, 541) eines auf einer ersten Seite des wenigstens einen Faserrovings (3) angeordneten Blocks (53) in eine Senke (532, 542) eines auf einer zweiten Seite des wenigstens einen Faserrovings (3) angeordneten Blocks (54, 54') eingreift und umgekehrt.

4. Vorrichtung nacheinem der vorhergehenden Ansprüche, **dadurch gekennzeichnet, dass** das erste Staubecken (512, 522, 522'), das zweite Staubecken (515, 525, 525') und die Austrittsdüse (517, 527) jeweils in einem das Imprägnierwerkzeug (5) montierten, austauschbaren Einsatz (55) ausgebildet sind.

5. Vorrichtung nach Anspruch 4 und einem der Ansprüche 2 oder 3, **dadurch gekennzeichnet, dass** der Einsatz (55) jeweils in einem Block (54) eingebaut ist.

6. Vorrichtung nach einem der vorhergehenden Ansprüche, **dadurch gekennzeichnet, dass** die Austrittsdüse (517, 527) eine Düsenweite (b) von maximal 0,8 mm aufweist.
